# EUROPEAN PATENT SPECIFICATION

(11) **EP 2 999 916 B1**
(45) Date of publication and mention of the grant of the patent: **25.07.2018**
(21) Application number: 14731315.9
(22) Date of filing: 20.05.2014
(51) Int. Cl.: F17C 13/04

(54) **A PRESSURISED FLUID CONTAINER**
UNTER DRUCK STEHENDER FLUIDBEHÄLTER
RÉCIPIENT DE FLUIDE SOUS PRESSION

(30) Priority: 20.05.2013 GB 201309046
(43) Date of publication of application: 30.03.2016
(73) Proprietor: Linde Aktiengesellschaft, 80331 München (DE)
(72) Inventor: WALES, Duncan, Caster Cambridgeshire PE5 7 AX (GB)
(74) Representative: Richmond, Sarah
(86) International application number: PCT/GB2014/000200
(87) International publication number: WO 2014/188151

(56) References cited:
- EP-A1- 0 990 825
- EP-A1- 1 426 663
- FR-A1- 2 244 123
- FR-A1- 2 878 313
- GB-A- 812 412
- US-A- 2 620 817

## Description

The present invention relates to a pressurised fluid container having a shut-off valve.

In particular, the invention relates to a pressurised gas cylinder for use, for example, with medical gasses, welding gasses and the like.

Such cylinders are traditionally provided with a shut off valve at the top of the cylinder which is protected by a guard. The valve has a valve element which is moved towards and away from a seat by rotation of a screw mechanism. This consists of a hand wheel with a male screw which mates with a female screw thread in the valve body. The user can therefore open and close the shut off valve by rotating the hand wheel to raise and lower the valve element.

Although such mechanisms are widely used, they suffer from a number of problems. The hand wheel requires multiple rotations in order to rotate it which is time consuming and it is not particularly accessible when the guard is in place. Further, it can be stuck in a fully open or a fully closed position. Although arrows are usually present on the wheel to indicate the direction of opening and closing to the user, it is difficult to determine by sight the current position of the wheel, such that the user can, for example, attempt to open an already fully open valve and mistakenly believe the valve to be stuck.

A further difficulty with the fact that there is no clear indication of position is that a user may not fully close a valve as there is no clear indication that the valve has reached the fully closed position, thereby leading to inadvertent leakage from the container.

A number of these problems are overcome by using a lever in place of a hand wheel.

A lever provides good mechanical advantage and its position can provide a clear indication of the position of the valve. The lever can, in one position, be placed alongside the container such that it is reasonably well protected from damage. However, it is required to move to a second position which is generally diametrically opposed to the first position and in such a position, it would be generally vulnerable to damage as such containers are often used in harsh environments and are vulnerable to being hit, dropped or knocked over.

This problem is addressed in CA2282129 which discloses that the lever has one or more lines of weakness. Thus, when the lever is knocked with a relatively large force, it should preferentially break along the line of weakness. This prevents large forces from being transmitted to delicate parts such as the pivot pin, failure of which would result in a loss of control of the valve position. Also, the point of weakness is designed such that the remaining portion of the lever is large enough that it can be gripped allowing continued operation of the container.

While this provides some protection, it will not work if the unexpected force is applied to the lever on the wrong side of the line of weakness. Under such circumstances, the force can still be transmitted to the valve element. This provides a reason to place the line of weakness relatively close to the pivot axis. However, doing this means that not only is there a relatively large area which must be sheared as the lever is generally thicker closer to the pivot axis, but also that the small portion which does remain will make further operation of the lever difficult once the bulk of the lever has sheared off.

According to the present invention, there is provided a pressurised fluid cylinder having a shut-off valve, the shut-off valve comprising a valve element which seals with a valve seat from which it is movable to selectively open the valve, a lever coupled to a rotatable shaft, rotation of which causes movement of a valve stem thereby lifting the valve element; a frangible element coupling the lever to the valve stem, the frangible element being arranged to fail when subjected to a load above a predetermined threshold about the axis of rotation of the shaft in a direction tending to open the valve so that, when the frangible element fails, the lever cannot transmit a force to the valve stem.

By placing the frangible element between the lever and the valve stem, the problems of the prior art are avoided. If the frangible element shears, the lever is inoperative. Thus, a force above the predetermined threshold anywhere on the lever will be protected against. Further, as there is no need to use the lever after the impact of the large force, the compromise of the prior art is avoided. Instead, the frangible element can simply be replaced allowing further use of the cylinder.

A first resilient biasing member may be provided to bias the valve element closed when the lever is close to or at a closed position. If the frangible element fails with the lever closed or nearly closed, the valve element will automatically close or remain closed despite the pressure from the cylinder. A second resilient member preferably biases the valve element open when the lever is at or close to an open position, the valve element being provided with a gripping feature, such as a pair of flats, by which it can be gripped by a tool and manually closed. Thus, if the frangible element fails with the lever open or nearly open, it will be biased open, but can then be manually closed if necessary.

The resilient biasing members may be springs, but can also be other such resilient members such as rubber rods.

In one example, the frangible element is a shear pin coupling the lever to the shaft. Alternatively, the frangible element may fail without shearing, for example, by plastic deformation. In these circumstances, once the shear pin has sheared, the lever cannot transmit a force to the shaft and hence the valve stem so that, even if the user operates the lever, this will not rotate the shaft and hence will not move the valve stem.

Alternatively, the shear element may be a region of weakness in the shaft itself between the point at which it is fixed to the lever and the point at which it is fixed to the valve stem. In this case, the shaft itself will shear and part of it will continue to rotate with the lever, but this will not rotate the sheared part hence decoupling the lever from the valve stem.

The valve body may also be provided with the frangible elements which will fail in the event that a lateral load is applied to the lever thereby allowing the lever to rotate about the outer main axis of the cylinder independently of the valve body to protect the valve itself against damage from unexpected lateral loads. This may be a separate frangible element as described in our co pending application. However, preferably, this second function can also be fulfilled by previously described frangible element. In this case, preferably, the shut off valve comprises a valve body which is screwed into the cylinder about the main axis, the valve element is biased towards the valve seat, and wherein the frangible element also retains the shaft in place and fails if a force above a first pre-determined threshold, which is less than the force required to unscrew the body, is applied to the shaft about the main axis in direction opposite to the direction in which the valve body is screwed into the cylinder, whereby failing of the frangible element allows the lever shaft and lever to rotate about the main axis independently of the valve body.

Preferably there are a pair of first frangible elements spaced along the shaft arranged so that, when one of the first frangible elements fails under a load above a predetermined threshold about the axis of rotation of the shaft in a direction tending to open the shaft, the remaining intact frangible element forms a pivot axis about which the shaft rotates to disengage from the lever.

An example of a cylinder in accordance with the present invention will now be described with reference to the accompanying drawings, in which:
Fig. 1 is a cross section through the top of the cylinder and the valve body;

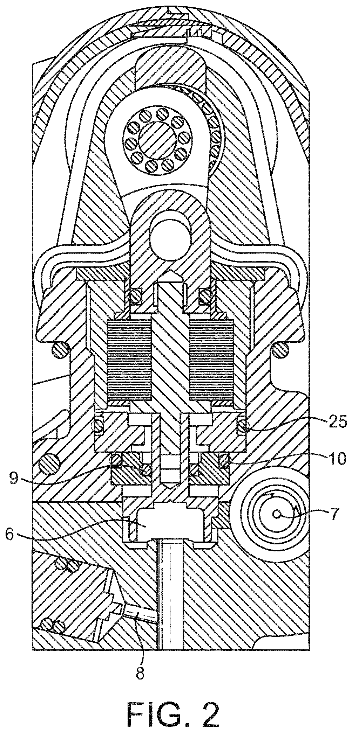

Fig. 2 is a cross section taken along lines II to II in Fig. 1;

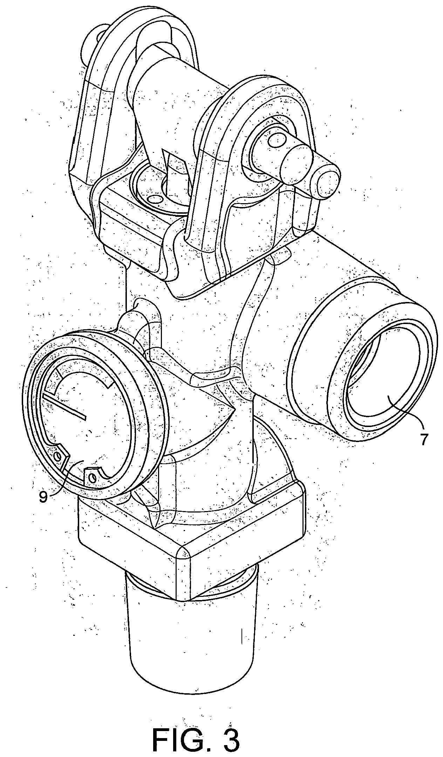

Fig. 3 is a perspective view of the valve body;
Fig. 4 shows the top portion of Fig. 1 in greater detail; and

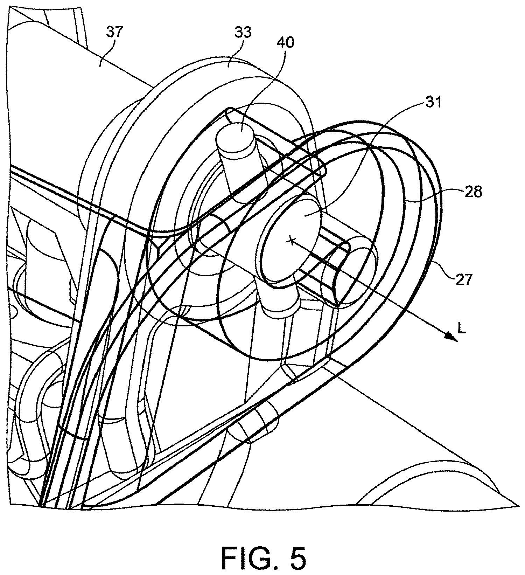

Fig. 5 is a perspective view of a portion of Fig. 1.
Fig. 6 is a section in a horizontal plane through a plane containing the pivot axis;
Fig. 7A is a cross section through the plane 7-7 in Fig. 5 with the lever in a closed position;
Fig. 7B is a view similar to Fig 7A showing the lever fully opened.

The fluid cylinder consists of a cylinder body 1 for a pressurised fluid and a valve body 2. The cylinder 1 is provided with a female screw thread 3 which mates with a male screw thread 4 on an outer surface of the lower portion of the valve body 2.

The valve body has an axial gas outlet path 5 extending centrally up through the valve body 2. Flow through the gas outlet path 5 is controlled by a valve element 6 which selectively blocks flow to a gas outlet port 7. The lateral port 8 of the pressure side of the valve element 6 leads to a pressure gauge G as is well known in the art.

The pressurised gas path is sealed above the valve element 6 by an inner 9 and outer 10 high pressure O-ring seal.

Lifting the valve element 6 from its seat 11 selectively opens the gas flow path out of the cylinder.
The mechanism for lifting the valve element 6 will now be described.

The valve element 6 is biased closed by a spring 15 the top end of which bears against a shoulder 16 in the valve body and the bottom of which bears against an annular flange 17 which forms part of the valve stem 18. As shown in the drawings, the valve stem 18 comprises a main stem 19, a valve element retaining member 20 and a valve element coupling number 21 all of which are rigidly fixed together.

In order to open the valve element 6 against the action of the spring 15, a lever mechanism is provided. This comprises a lever 27 which is connected via a pair of bosses 28 and shear pins 29 to be rotatable with a shaft 31 about fixed lever axis L. The shear pins project from both ends of the shaft 31 into the bosses 28 and protect the valve mechanism against unexpected forces about the lever axis L in the opening direction.

A stop 40 protrudes from the valve body 2 and acts as a stop for the lever 27 in the closed position. A part of the lever 27 bears against the stop 40 so that unwanted closing force on the lever is transmitted to the stop 40 not to the valve element.

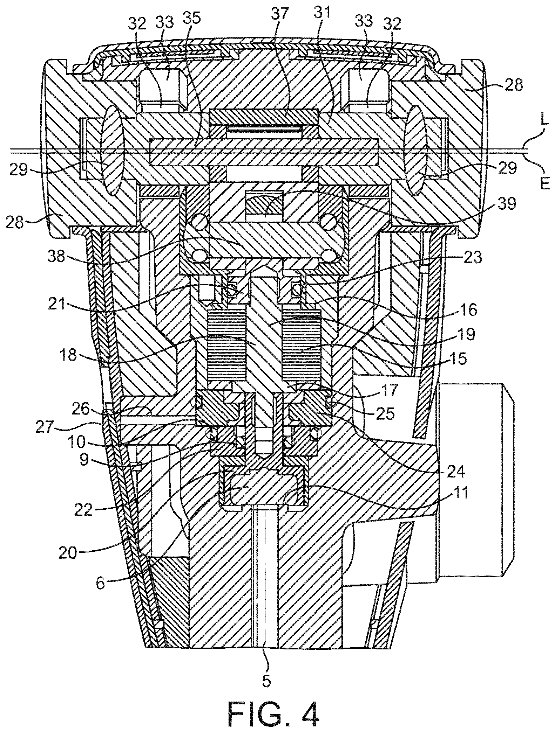

The shaft is mounted in bearings 32 in respective bosses 33 at the top of the valve body as best shown in Fig. 4. An eccentric pin 35 forms a central portion of the shaft 31 and is mounted to rotate about an eccentric axis E off-set from lever axis L and which moves as the lever 27 is operated. A linkage member 37 is rotatably mounted to the eccentric pin 35 via pin bearings 38 and extends at its lower end to a connecting pin 39 which extends through and is coupled to an orifice 40 in the valve element coupling member 21.

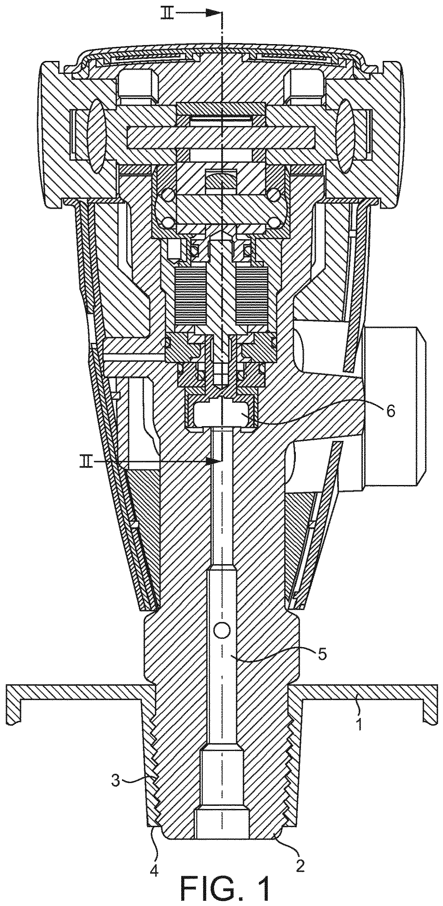

This provides a crank arrangement whereupon lifting the lifting lever 27 from its at rest position shown in Figs. 1 and 4 initially causes upward movement of the connecting pin 38 and hence the valve element, thereby compressing a spring 15. This effectively ensures that the valve is locked in the closed position as the spring force must be overcome before the valve can be opened. Once the lever 27 reaches an over-centre position, the direction of the force applied by the lever to the connecting pin 38 is reversed and this, together with the energy stored in the spring by the initial compression and the gas pressure in the cylinder causes the valve element 6 to snap open.

It should be noted that while the invention has been described in relation to this one particular configuration of a lever operated system, it is broadly applicable to any lever operated system for example as disclosed in CA 2282129.

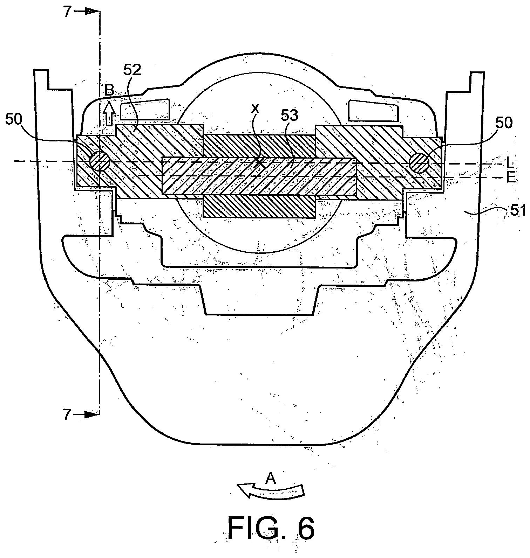

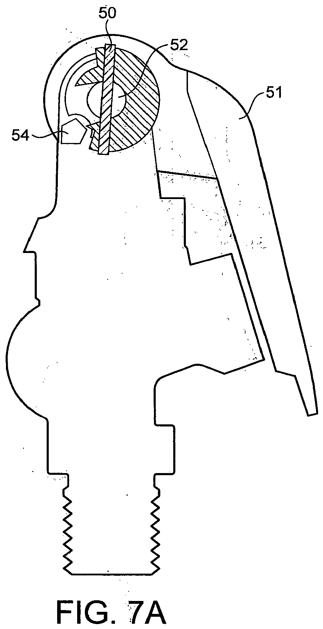

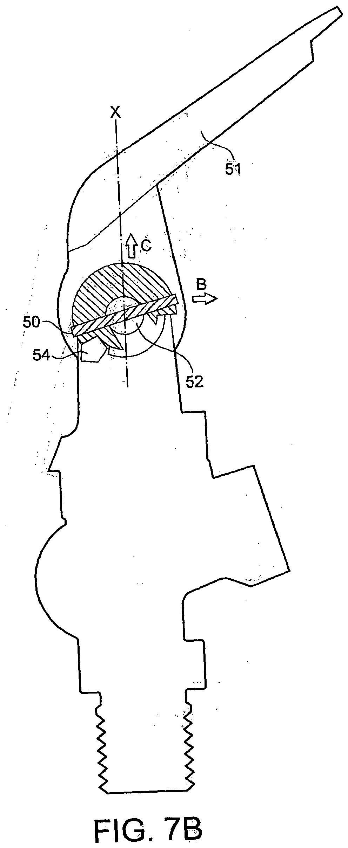

A third example as shown in Figs. 6, 7A and 7B.

The basic details are the same as those in the earlier examples and have not been repeated here. The fundamental difference is that the shear pin 50 now fulfils a dual function. As shown, the lever 51 is rotatable with a shaft 52 about a lever axis L. The shaft 52 is mounted to an eccentric pin 53 which rotates about eccentric axis E. This is coupled to the valve stem as described below. On either side of a median plane as shown in Fig. 6 the frangible element connects the shaft 52 to the lever 51 as best shown in Figs. 7A and 7B. A travel stop 54 shown in Figs. 7A and 7B limits the angle of rotation of the lever 51. If an undue force is applied to the lever 51 about the pivot axis L this undue force will cause both shear pins in 50 shear thereby breaking the connection between the lever 51 and shaft 52 such that the lever 51 is free to rotate on the shaft 52 thereby protecting the valve assembly from undue axial loads. If the valve has not passed top dead centre the spring 15 biases valve element 6 closed and will therefore retain the valve closed after the shear pins have sheared. Otherwise, if the valve has passed top dead centre, the failure of the shear pins leaves the valve open.

The shear pins 50 also protect against an unexpected force on the lever in the direction about the main axis X. Such a force would be applied to the lever into or out of the plane of the paper as shown in Figs.7A and 7B. With reference to Fig. 6, such a force is applied in the plane of the paper about the axis X (see arrow A, or the opposite direction). This may be applied in a clockwise or an anticlockwise direction in Fig. 6 depending upon the direction in which the lever 51 is struck.

With particular reference to Figs. 6 and 7B, when a load is applied to the lever either in the anticlockwise or the clockwise direction in Fig. 6, the angle between the face of the lever 51 which contacts the shaft 52 will cause a resultant horizontal B and vertical C forces on the pins. As will be apparent from Fig. 7B, if the load is applied in a clockwise direction as designated by arrow A, the resultant horizontal forces on the shear pins will be as shown by the two arrows B and C on the right hand side, this force is supported by the engagement between the shaft 52 and lever 51. On the other side, however, because of the cut out portion 55 and lever 51, the pin is not supported and this will generate a force on the shear pin 50 which may be sufficient to break it. If so, the resultant vertical force C will cause the lever to be lifted 51 off the shaft 52 while pivoting about the unbroken shear pin 50. As the lever 51 is disengaged from the shaft 52, any further lateral forces about the axis X will not be transmitted from the lever to the valve body.

## Claims

1. A pressurised fluid cylinder (1) having a shut-off valve, the shut-off valve comprising:
a valve element (6) which seals with a valve seat (11) from which it is movable to selectively open the valve;
a lever (27) coupled to a rotatable shaft (31), rotation of which causes movement of a valve stem (18) thereby lifting the valve element (6);
a frangible element (29) being arranged to fail when subjected to a load above a predetermined threshold about the axis of rotation of the shaft (31) in a direction tending to open the valve,
**characterised in that**:
the frangible element (29) couples the lever (27) to the valve stem (18); and
the frangible element (29) is arranged to fail so that when the frangible element (29) fails, the lever (27) cannot transmit a force to the valve stem (18).

2. A cylinder (1) according to claim 1, wherein a first resilient biasing element (15) biases the valve element (6) closed when the lever (27) is at or close to a closed position.

3. A cylinder (1) according to any preceding claim, wherein the frangible element (29) is a shear pin coupling the lever (27) to the shaft (31).

4. A cylinder (1) according to claim 1 or claim 2, wherein the frangible element (29) is a region of weakness in the shaft (31) itself between the point at which it is fixed to the lever (27) and the point at which it is fixed to the valve stem (18).

5. A cylinder (1) according any one of the preceding claims, wherein the shut off valve comprises a valve body (2) which is screwed into the cylinder (1) about the main axis, the valve element (6) is biased towards the valve seat (11), and wherein the frangible element (29) also retains the shaft (31) in place and fails if a force above a first pre-determined threshold, which is less than the force required to unscrew the body (2), is applied to the shaft (31) about the main axis in direction opposite to the direction in which the valve body (2) is screwed into the cylinder (1), whereby failing of the frangible element (29) allows the lever shaft (31) and lever (27) to rotate about the main axis independently of the valve body (2).

6. A cylinder according to claim 5, wherein, there are a pair of frangible elements (29) spaced along the shaft (31) arranged so that, when one of the first frangible elements (29) fails under a load above a predetermined threshold about the axis of rotation of the shaft (31) in a direction tending to open the shaft (31), the remaining intact frangible element (29) forms a pivot axis about which the shaft (31) rotates to disengage from the lever (27).

## Patentansprüche

1. Fluiddruckzylinder (1) mit einem Sperrventil, wobei das Sperrventil Folgendes umfasst:
ein Ventilelement (6), das mit einem Ventilsitz (11) abdichtet, von dem aus es bewegbar ist, um das Ventil gezielt zu öffnen;
einen mit einer drehbaren Welle (31) gekoppelten Hebel (27), dessen Drehung Bewegung eines Ventilschafts (18) bewirkt, wodurch das Ventilelement (6) angehoben wird;
ein zerbrechbares Element (29), das dazu angeordnet ist, auszufallen, wenn es einer Last über einer vorbestimmten Schwelle um die Drehachse der Welle (31) in einer Richtung ausgesetzt ist, die dazu neigt, das Ventil zu öffnen,
**dadurch gekennzeichnet, dass**:
das zerbrechbare Element (29) den Hebel (27) mit dem Ventilschaft (18) koppelt; und
das zerbrechbare Element (29) dazu ausgelegt ist auszufallen, sodass, wenn das zerbrechbare Element (29) ausfällt, der Hebel (27) keine Kraft auf den Ventilschaft (18) übertragen kann.

2. Zylinder (1) nach Anspruch 1, wobei ein erstes elastisches Vorspannelement (15) das Ventilelement (6) geschlossen vorspannt, wenn der Hebel (27) bei oder nahe bei einer geschlossenen Position ist.

3. Zylinder (1) nach einem der vorhergehenden Ansprüche, wobei das zerbrechbare Element (29) ein Scherstift ist, der den Hebel (27) mit der Welle (31) koppelt.

4. Zylinder (1) nach Anspruch 1 oder Anspruch 2, wobei das zerbrechbare Element (29) ein Bereich der Schwäche in der Welle (31) selbst ist zwischen dem Punkt, an dem sie am Hebel (27) befestigt ist, und dem Punkt, an dem sie am Ventilschaft (18) befestigt ist.

5. Zylinder (1) nach einem der vorhergehenden Ansprüche, wobei das Sperrventil einen Ventilkörper (2) umfasst, der in den Zylinder (1) um die Hauptachse geschraubt ist, wobei das Ventilelement (6) in Richtung des Ventilsitzes (11) vorgespannt ist, und wobei das zerbrechbare Element (29) auch die Welle (31) an ihrem Platz hält und ausfällt, wenn eine Kraft über einer ersten Schwelle, die kleiner als die zum Abschrauben des Körpers (2) erforderliche Kraft ist, auf die Welle (31) um die Hauptachse in eine der Richtung, in der der Ventilkörper (2) in den Zylinder (1) geschraubt ist, entgegengesetzte Richtung wirkt, wobei Ausfallen des zerbrechbaren Elements (29) der Hebelwelle (31) und dem Hebel (27) ermöglicht, sich unabhängig vom Ventilkörper (2) um die Hauptachse zu drehen.

6. Zylinder nach Anspruch 5, wobei es ein Paar von zerbrechbaren Elementen (29) gibt, die beabstandet entlang der Welle (31) so angeordnet sind, dass, wenn eines der ersten zerbrechbaren Elemente (29) unter einer Last über einer vorbestimmten Schwelle um die Drehachse der Welle (31) in eine Richtung, die dazu neigt, die Welle (31) zu öffnen, ausfällt, das verbleibende intakte zerbrechbare Element (29) eine Drehachse bildet, um die sich die Welle (31) dreht, um den Eingriff in den Hebel (27) zu lösen.

## Revendications

1. Cylindre de fluide sous pression (1) comportant une valve de retenue, la valve de retenue comprenant :
un élément (6) de valve qui assure l'étanchéité avec un siège (11) de valve à partir duquel il peut s'éloigner pour ouvrir sélectivement la valve ;
un levier (27) accouplé à un arbre (31) rotatif, dont la rotation provoque le déplacement d'une tige (18) de valve, soulevant de ce fait l'élément (6) de valve ;
un élément cassable (29) étant agencé pour céder quand il est soumis à une charge supérieure à un seuil prédéterminé autour de l'axe de rotation de l'arbre (31) dans un sens tendant à ouvrir la valve,
**caractérisé en ce que** :
l'élément cassable (29) accouple le levier (27) à la tige (18) de valve ; et
l'élément cassable (29) est agencé pour céder de façon à ce que, quand l'élément cassable (29) cède, le levier (27) ne peut pas transmettre de force à la tige (18) de valve.

2. Cylindre (1) selon la revendication 1, dans lequel un premier élément de sollicitation (15) élastique sollicite l'élément (6) de valve pour le fermer quand le levier (27) est au niveau ou près d'une position fermée.

3. Cylindre (1) selon l'une quelconque des revendications précédentes, dans lequel l'élément cassable (29) est une goupille de cisaillement accouplant le levier (27) à l'arbre (31).

4. Cylindre (1) selon la revendication 1 ou 2, dans lequel l'élément cassable (29) est une zone de faiblesse dans l'arbre (31) lui-même entre le point auquel il est fixé au levier (27) et le point auquel il est fixé à la tige (18) de valve.

5. Cylindre (1) selon l'une quelconque des revendications précédentes, dans lequel la valve de retenue comprend un corps (2) de valve qui est vissé dans le cylindre (1) autour de l'axe principal, l'élément (6) de valve étant sollicité vers le siège (11) de valve, et dans lequel l'élément cassable (29) retient également l'arbre (31) en place et cède si une force supérieure à un premier seuil prédéterminé, qui est inférieur à la force nécessaire pour dévisser le corps (2), est appliquée à l'arbre (31) autour de l'axe principal dans le sens opposé au sens dans lequel on visse le corps (2) de valve dans le cylindre (1), moyennant quoi la rupture de l'élément cassable (29) permet à l'arbre (31) de levier et au levier (27) de tourner autour de l'axe principal indépendamment du corps (2) de valve.

6. Cylindre selon la revendication 5, dans lequel il y a une paire d'éléments cassables (29) espacés le long de l'arbre (31) et agencés de façon à ce que, quand l'un des premiers éléments cassables (29) cède sous une charge supérieure à un seuil prédéterminé autour de l'axe de rotation de l'arbre (31) dans un sens tendant à ouvrir l'arbre (31), l'élément cassable (29) restant intact constitue un axe de pivot autour duquel l'arbre (31) tourne pour se désolidariser du levier (27).
